# EUROPÄISCHE PATENTANMELDUNG

(11) **EP 3 905 079 A1**
(43) Veröffentlichungstag der Anmeldung: **03.11.2021**
(21) Anmeldenummer: 20171492.0
(22) Anmeldetag: 27.04.2020
(51) Int. Cl.: G06F 21/31

(54) **VERFAHREN UND ANORDNUNG ZUM DETEKTIEREN EINER MISSBRÄUCHLICHEN NUTZUNG EINES COMPUTERS MIT EINEM BERÜHRUNGSEMPFINDLICHEN BILDSCHIRM**

(71) Anmelder: Siemens Aktiengesellschaft, 80333 München (DE)
(72) Erfinder: Kubo, Florian, 97727 Fuchsstadt (DE); Jöhnßen, Oliver, 90451 Nürnberg (DE); Rempel, Karina, 91056 Erlangen (DE)

(57) **Zusammenfassung**

Die Erfindung betrifft ein Verfahren und eine Anordnung zum Detektieren einer missbräuchlichen Nutzung eines Computers mit einem berührungsempfindlichen Bildschirm (TS), insbesondere eines industriellen Bedien-Panels zur Steuerung einer industriellen Anwendung, vorgeschlagen, wobei durch einen an dem Computer angemeldeten Nutzer eine Anzahl Berührungen auf dem Bildschirm (TS) vorgenommen wird, und wobei anhand der Koordinaten der registrierten Berührungen eine Eingabe an dem Computer vorgenommen wird. Dabei werden spezifisch für einen oder mehrere Nutzer Rohdaten bei einer Berührung des berührungsempfindlichen Bildschirms (TS) bei einer ersten Nutzung erfasst und gespeichert, wobei bei einer aktuellen Nutzung des Bildschirms aktuelle Rohdaten bei einer Berührung des berührungsempfindlichen Bildschirms (TS) erfasst und mit den in Bezug auf denselben Nutzer gespeicherten Rohdaten verglichen werden, wobei anhand des Vergleichs entschieden wird, ob die Eingabe durch den aktuell an dem Computer angemeldeten Nutzer erfolgt oder durch einen anderen Nutzer, und wobei im letzteren Fall eine Sicherheitsreaktion erfolgt, insbesondere eine Sperrung des Computers erfolgt oder eine Authentifizierung des Nutzers angefordert wird. Durch dieses Verfahren ist es möglich, nutzungsbegleitend einen unautorisierten Wechsel des Nutzers zu erkennen.

## Beschreibung

Die Erfindung betrifft ein Verfahren zum Detektieren einer missbräuchlichen Nutzung eines Computers mit einem berührungsempfindlichen Bildschirm gemäß dem Oberbegriff des Patentanspruchs 1, und eine Anordnung zum Detektieren einer missbräuchlichen Nutzung eines Computers mit einem berührungsempfindlichen Bildschirm gemäß dem Oberbegriff des Patentanspruchs 15.

In industriellen Automatisierungsanordnungen und auch in anderen Bereichen kommen oft teure Investitionsgüter oder andere schützenswerte Einrichtungen zum Einsatz, die lange Zeit an einem Stück und oft sogar rund um die Uhr verwendet werden. Das bedeutet auch, dass solche Maschinen, Computer, Systeme und Anwendungen täglich von mehreren unterschiedlichen Benutzern bedient werden. Üblicherweise meldet sich ein Nutzer bei einem Computer oder einer Anwendung an, indem er sich authentifiziert. Das kann beispielsweise durch die Eingabe eines Passwortes, die Eingabe eines Fingerabdrucks, durch die Identifizierung mittels einer Kamera, die Eingabe einer Smartcard oder dgl. passieren. Damit soll sichergestellt werden, dass keine missbräuchliche Nutzung des Computers stattfinden kann. Dabei soll im Folgenden das Wort "Computer" als Synonym für die zu bedienende datentechnische Einrichtung verwendet werden; insbesondere ist mit "Computer" in diesem Zusammenhang auch ein Bedien- und Beobachtungsgerät (HMI-Gerät) einer industriellen Anordnung gemeint, insbesondere ein sogenanntes Bedien-Panel oder dgl. mit einem berührungsempfindlichen Bildschirm (Touch Screen).

Bei solchen Computern und den damit betriebenen Anwendungen ist es üblich, dass nach einer erfolgreichen Anmeldung (Authentifizierung) eines Nutzers für einen bestimmten Zeitraum keine weitere Authentifizierung des Nutzers stattfindet. Dies bedeutet, dass bei einem "entsperrten" Gerät oder Computer insbesondere in unbeobachteten Momenten jede andere Person Eingaben und somit eine missbräuchliche Nutzung vornehmen kann. Dies ist insbesondere bei industriellen Leitsystemen und anderen Computern dann der Fall, wenn eine ständige, engmaschige erneute Anforderung einer Authentifizierung des Nutzers unpraktikabel ist, so dass diese Einrichtungen oft eine lange Zeit "entsperrt" betrieben werden.

Durch eine lange zugelassene Zeitspanne zwischen den Authentifizierungen ("timeout") ist dabei also die Überprüfung der Zugriffsberechtigung faktisch zumindest teilweise außer Kraft gesetzt. Oftmals werden auch Schlüsselkarten und andere Authentifizierungsmittel leichtfertig aus der Hand gegeben, beispielsweise an Hilfskräfte, Werkstudenten oder andere eigentlich nicht authentifizierte Personen. Dieses Vorgehen hat zur Folge, dass eine missbräuchliche Nutzung erfolgen kann und sogar in vielen Fällen unentdeckt bleibt. Sofern ein nicht authentifizierter Nutzer zu einer Zeit, zu der ein anderer Nutzer an einer Maschine oder einem Computer angemeldet ist, diese Sitzung missbräuchlich verwendet, spricht man auch von sogenanntem "Account Hijacking".

Zur Lösung dieses Problems werden häufig die in einer Anwendung oder in einem Computersystem vorgegebenen Vorschriften ("Policies") restriktiver eingestellt, um beispielsweise ein häufigeres Authentifizieren zu verlangen. Dies führt jedoch oft zumindest zu Komforteinbußen, verhindert aber auch in kritischen Situationen häufig eine schnelle Maßnahme, weil ein Nutzer, also ein berechtigter Nutzer, sich zunächst gegenüber dem System neu authentifizieren muss, bevor er eine wichtige Bedienhandlung vornehmen kann, beispielsweise einen wichtigen Systemeingriff oder dgl.

Weitere Maßnahmen sind beispielsweise die Umrüstung von Maschinen bzw. von deren Bediengeräten und Computern auf komfortable und zugleich sichere Verfahren, beispielsweise Gesichtserkennung, Fingerabdruck-Eingabe, implantierte RFID-Chips oder dgl. Solche Maßnahmen sind jedoch häufig mit ungewünschten Investitionen verbunden oder werden in anderen Fällen auch von den Benutzern abgelehnt.

Aus den vorgenannten Gründen kann also eine missbräuchliche Nutzung, ein sogenanntes "Account Hijacking", nicht in allen Fällen zuverlässig verhindert werden.

Es ist daher eine Aufgabe der vorliegenden Erfindung, eine missbräuchliche Nutzung von Computern mit berührungsempfindlichen Bildschirmen im laufenden produktiven Betrieb zu erkennen, so dass automatisch Reaktionen auf diese missbräuchliche Nutzung ausgelöst werden können.

Der erfindungsgemäßen Lösung der vorstehend beschriebenen Aufgabe liegt die Erkenntnis zugrunde, dass von den berührungsempfindlichen Bildschirmen bzw. den damit angesteuerten technischen Einrichtungen (Treiber, Firmware) in der Regel zwar bei einer Berührungseingabe eine Koordinate der Berührung als Ereignis an den zu steuernden Computer weitergereicht werden, aber zur Erzeugung dieser Koordinate und zur Erfassung der Berührung zunächst aussagekräftige Rohdaten erfasst werden, die Rückschlüsse auf denjenigen Nutzer zulassen, der die entsprechende Berührung an dem Bildschirm vorgenommen hat. Diese Rohdaten sollen erfindungsgemäß dazu verwendet werden, eine missbräuchliche Nutzung festzustellen, indem die Rohdaten bei einer aktuellen Nutzung mit solchen verglichen werden, die bei einer ersten autorisierten Nutzung des Computers, der Anwendung oder allgemein des Systems aufgezeichnet wurden. Bei einer hohen Übereinstimmung der Rohdaten wird dabei vermutet, dass ursprünglicher und aktueller Nutzer identisch sind, was mittels einer Schwellwertbetrachtung oder mittels einer entsprechend trainierten künstlichen Intelligenz (z.B. neuronales Netz) erkannt werden kann. Vorteilhaft werden dabei Rohdaten miteinander verglichen, die bei demselben Bedienschritt oder bei derselben "Bedienmaske" des Computers, der Anwendung oder allgemein des Systems aufgezeichnet wurden, was die Zuverlässigkeit der Erkennung einer missbräuchlichen Nutzung wesentlich verbessert.

Die Aufgabe wird insbesondere durch ein Verfahren gemäß dem Patentanspruch 1 und durch eine Anordnung gemäß dem Patentanspruch 15 gelöst.

Dabei wird ein Verfahren zum Detektieren einer missbräuchlichen Nutzung eines Computers mit einem berührungsempfindlichen Bildschirm, insbesondere eines industriellen Bedien-Panels zur Steuerung einer industriellen Anwendung, vorgeschlagen, wobei durch einen an dem Computer angemeldeten Nutzer eine Anzahl Berührungen auf dem Bildschirm vorgenommen wird, und wobei anhand der Koordinaten der registrierten Berührungen eine Eingabe an dem Computer vorgenommen wird. Dabei werden spezifisch für einen oder mehrere Nutzer Rohdaten bei einer Berührung des berührungsempfindlichen Bildschirms bei einer ersten Nutzung erfasst und gespeichert, wobei bei einer aktuellen Nutzung des Bildschirms aktuelle Rohdaten bei einer Berührung des berührungsempfindlichen Bildschirms erfasst und mit den in Bezug auf denselben Nutzer gespeicherten Rohdaten verglichen werden, wobei anhand des Vergleichs entschieden wird, ob die Eingabe durch den aktuell an dem Computer angemeldeten Nutzer erfolgt oder durch einen anderen Nutzer, und wobei im letzteren Fall eine Sicherheitsreaktion erfolgt, insbesondere eine Sperrung des Computers erfolgt oder eine Authentifizierung des Nutzers angefordert wird. Durch dieses Verfahren ist es möglich, bei einer ersten Nutzung für den dabei angemeldeten und authentifizierten Nutzer Charakteristika über dessen Berührungseingaben zu speichern, wobei bei einer oder jeder späteren Nutzung die dann auftretenden Charakteristika mit diesen gespeicherten verglichen werden, wobei bei einer unzulässig großen Abweichung eine missbräuchliche Nutzung vermutet wird, wonach dann Maßnahmen ergriffen werden können.

Die Aufgabe wird außerdem durch eine Anordnung zum Detektieren einer missbräuchlichen Nutzung eines Computers, insbesondere eines industriellen Bedien-Panels zur Steuerung einer industriellen Anwendung, gelöst, mit dem Computer und einem berührungsempfindlichen Bildschirm, wobei der berührungsempfindliche Bildschirm zur Registrierung einer Anzahl Berührungen eines Nutzers und der zur Übertragung der dabei erfassten Koordinaten der registrierten Berührung an den Computer eingerichtet ist. Dabei ist der berührungsempfindliche Bildschirm zur Erfassung von Rohdaten bei der Benutzung des berührungsempfindlichen Bildschirms eingerichtet, wobei eine Verarbeitungseinrichtung zur benutzerspezifischen Speicherung der Rohdaten oder von aus den Rohdaten gewonnenen charakteristischen Informationen bei einer ersten Nutzung vorgesehen ist, wobei die Verarbeitungseinrichtung zum Vergleich der Rohdaten oder der charakteristischen Informationen einer aktuellen Nutzung des berührungsempfindlichen Bildschirms mit den bei der ersten Nutzung erfassten Rohdaten oder charakteristischen Informationen eingerichtet ist, wobei die Verarbeitungseinheit zur Verifizierung der Identität des angemeldeten Nutzers bei einer aktuellen Nutzung anhand des Vergleichs eingerichtet ist, und wobei die Verarbeitungseinheit zur Veranlassung einer Sicherheitsreaktion im Falle einer fehlgeschlagenen Verifizierung eingerichtet ist, insbesondere zur Sperrung des Computers oder zur Anforderung einer Authentifizierung des Nutzers. Durch diese Anordnung können diejenigen Vorteile realisiert werden, die bereits anhand des Verfahrens diskutiert wurden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Anordnung. Die einzelnen Merkmale und Maßnahmen können dabei sowohl einzeln als auch in sinnfälliger Kombination miteinander angewendet werden.

Die Erkennungsgenauigkeit einer missbräuchlichen Nutzung wird wesentlich verbessert, wenn die Eingabe aus einer Sequenz mit einer Mehrzahl von Berührungs-Interaktionen besteht, wobei spezifisch für einen oder mehrere Nutzer ein Interaktionsmuster erfasst und gespeichert wird, wobei bei einer aktuellen Nutzung des Computers ein aktuell registriertes Interaktionsmuster mit dem oder den gespeicherten Interaktionsmustern verglichen wird, insbesondere mit dem Interaktionsmuster des aktuell an dem Computer angemeldeten Nutzers. Vorteilhaft ist das Interaktionsmuster dabei spezifisch für einen oder mehrere Bedienschritte des Computers oder der Anwendung oder der damit bedienten Einrichtung, wobei dann die Interaktionsmuster jeweils für denselben Bedienschritt miteinander verglichen werden. Dabei wird davon ausgegangen, dass die Berührungs-Interaktionen und die dabei entstehenden Rohdaten eines kompletten Interaktionsmusters, die aus einer Vielzahl von Berührungen bestehen, charakteristischer für einen bestimmten Nutzer sind, als einzelne Berührungs-Interaktionen (Berührungen, "Touch-Eingaben").

Vorteilhaft wird mit vielen oder jeder Berührungs-Interaktion der Sequenz eine Zeitinformation zur zeitlichen Bestimmung eines Bezugs zwischen den Berührungs-Interaktionen erfasst. Somit kann beispielsweise der Tatsache Rechnung getragen werden, dass bestimmte Benutzer bei einer Bedien-Sequenz an für sie charakteristischen Stellen eine kleine, fast unmerkliche Pause machen oder bestimmte aufeinander folgende Eingaben besonders schnell oder besonders langsam vornehmen. Die Zeitinformationen können dabei insbesondere relativ zu einer ersten Bedienhandlung einer Sequenz aufgezeichnet werden. Solche Sequenzen und Interaktionsmuster, die mit Zeitinformationen verknüpft sind, können darüber hinaus vorteilhaft zum Trainieren einer künstlichen Intelligenz, beispielsweise eines neuronalen Netzwerks, verwendet werden, so dass im produktiven Betrieb des Computers oder der Einrichtung die Eingaben wiederum durch das neuronale Netzwerk oder allgemein durch die künstliche Intelligenz überprüft werden. Vorteilhaft wird dabei ein Grad der Übereinstimmung zwischen dem aktuell registrierten Interaktionsmuster und dem für den angemeldeten Nutzer gespeicherten Interaktionsmuster ausgegeben, wobei anhand einer Schwellwert-Analyse darüber entschieden werden kann, ob eine missbräuchliche Nutzung vermutet wird, oder nicht.

In einer besonders vorteilhaften Variante werden zu einer Anzahl der Berührungs-Interaktionen also jeweils Rohdaten bei der ersten Nutzung gespeichert und dem Interaktionsmuster zugeordnet und mit diesem gespeichert, wobei bei der späteren Nutzung bei korrelierenden Interaktionen aktuelle Rohdaten ermittelt und mit den in Bezug auf denselben Nutzer gespeicherten Rohdaten der Berührungs-Interaktionen verglichen werden. Dadurch, dass die Berührungs-Interaktionen zu einem komplexen Interaktionsmuster mit einer Vielzahl von Interaktionen gehören, und gleichzeitig die Rohdaten dieser einzelnen Interaktionen für den Vergleich herangezogen werden, wird die Erkennungsgenauigkeit bzw. Erkennungswahrscheinlichkeit für die missbräuchliche Nutzung wesentlich verbessert.

Bei kapazitiven berührungsempfindlichen Bildschirmen werden als die Rohdaten vorteilhaft die bei einer Berührung registrierten Kapazitätswerte zumindest der im Bereich der Berührung liegenden Zellen bzw. Rasterflächen des Bildschirms verwendet, wodurch es möglich ist, besonders charakteristische Daten für die Bedienhandlung oder Berührung zu gewinnen. Dadurch, dass die Kapazitätswerte einer Vielzahl von Zellen erfasst werden, steigt die Erkennungsgenauigkeit. Insbesondere ist es dabei auch möglich, auf eine Lage des Fingers oder Gegenstandes, mit dem die Berührung ausgelöst wurde, zu schließen. Dabei kann ein planarer Winkel oder sogar ein Raumwinkel für einen Finger oder dgl. angenommen werden. Auch die dabei aufgewendete Kraft und die Verteilung der Kraft in einem Berührungsbereich ist charakteristisch und kann mit der Aufzeichnung dieser Rohdaten erfasst und für den Vergleich herangezogen werden. In analoger Weise können auch bei resistiven berührungsempfindlichen Bildschirmen die Widerstandswerte mehrere Flächenelemente oder Koordinatenpaare als Rohdaten verwendet werden.

Das Verfahren und die Anordnung können vorteilhaft auch zur Analyse von sogenannten Gesten oder Berührungsgesten verwendet werden, bei der ein Finger oder ein anderer Gegenstand eine Bewegung auf dem berührungsempfindlichen Bildschirm ausübt. Dazu dienen dann gewonnene Informationen über die Ausdehnung, Richtung und/oder Geschwindigkeit der Berührungsgeste, Beschleunigung oder Verzögerung während der Bewegung, und andere Werte, die aus den Rohdaten abgeleitet werden können.

Aus den Rohdaten können also auch weitere charakteristische Informationen gewonnen werden, insbesondere Informationen über eine Auflagekraft, über die von einer Berührung betroffene Fläche, die Verteilung einer Kraft auf der Fläche und dgl. Auch diese Daten sollen als Rohdaten oder mit den Rohdaten für die Vergleiche gespeichert und berücksichtigt werden. Die Erfassung der Rohdaten, die Speicherung auf den jeweiligen Benutzer bezogen und die Vergleiche werden vorteilhaft von einer Verarbeitungseinrichtung vorgenommen, wobei diese Verarbeitungseinrichtung beispielsweise ein separates Software-Modul auf demjenigen Computer sein kann, der durch den berührungsempfindlichen Bildschirm gesteuert wird. Es ist aber auch möglich, einen separaten Computer oder einen separaten Dienst, der auch in einer Rechenwolke ("Cloud") betrieben werden kann, mit dieser Aufgabe zu betrauen. Auch eine Integration in die Technik des Bildschirms ist möglich. Wesentlich ist, dass eine Datenschnittstelle oder ein Datenkanal zwischen der Technik des berührungsempfindlichen Bildschirms, also beispielsweise der Treiberbausteine, und der Verarbeitungseinrichtung gegeben ist, worüber die Rohdaten übermittelt werden. Gleichzeitig sollen durch die gesteuerte Anwendung des Computers Informationen über den derzeit bedienten Bedienschritt oder die derzeit bediente Eingabemaske oder dgl., also applikative Informationen, an die Verarbeitungseinrichtung übertragen werden, um die Korrelation zwischen den Rohdaten und dem jeweiligen aktuellen Bedienschritt oder dgl. durchführen zu können.

Ein Ausführungsbeispiel des erfindungsgemäßen Verfahrens wird nachfolgend anhand der Zeichnungen erläutert. Es dient gleichzeitig der Erläuterung einer erfindungsgemäßen Anordnung.

Dabei zeigen:
- Figur 1: einen berührungsempfindlichen Bildschirm mit einem einfachen Eingabedialog,
- Figur 2: den berührungsempfindlichen Bildschirm mit den bei der Bedienung der Eingabemaske registrierten Rohdaten, und
- Figur 3: den berührungsempfindlichen Bildschirm mit den Rohdaten, wobei zwei erfasste Berührungen gekennzeichnet sind.

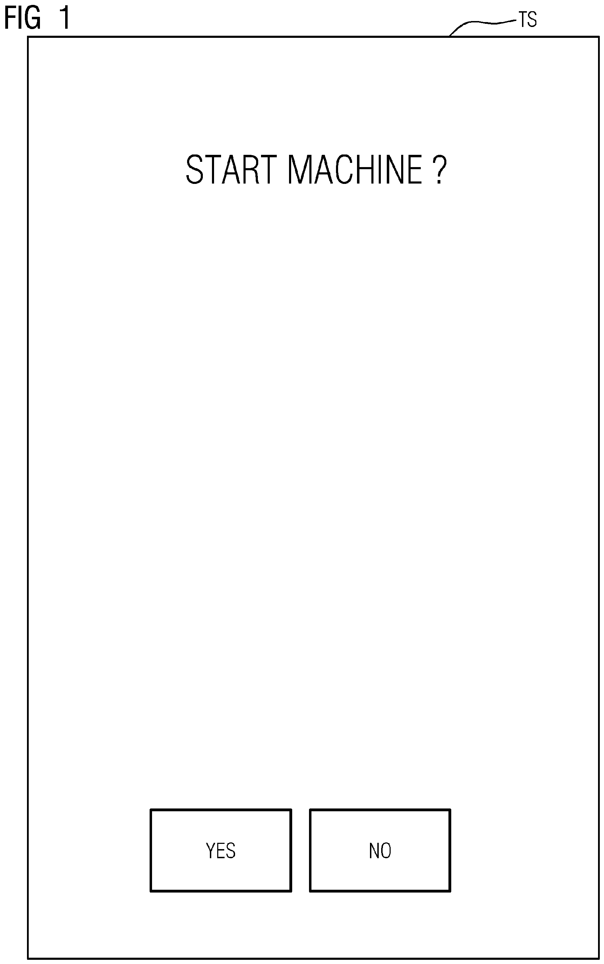

In der Figur 1 ist ein berührungsempfindlicher Bildschirm TS ("Touch Screen") eines Bediengerätes einer industriellen Automatisierungsanordnung schematisch dargestellt. Das Bediengerät kann im vorliegenden Fall beispielsweise ein Telefon sein (Smartphone), welches kommunikativ mit einer industriellen Steuerung verbunden ist. Auf dem Bildschirm TS ist ein simpler Dialog ("Start Machine?") dargestellt, wobei ein Nutzer zwei Eingabemöglichkeiten YES, NO hat. Im Folgenden soll dabei angenommen werden, dass der Nutzer das Gerät mit dem Bildschirm TS in die rechte Hand nimmt und mit einem Finger der linken Hand die Schaltfläche NO betätigt. In anderen Beispielen ist das "Panel" fest verbaut, was jedoch für das im Folgenden dargelegte Prinzip unerheblich ist.

Es soll angenommen werden, dass es sich bei dem berührungsempfindlichen Bildschirm TS um einen kapazitiven "Touchscreen" handelt. Dies bedeutet, dass für jede Rasterzelle oder Rasterpunkt des Bildschirms TS als Rohdaten ein Kapazitätswert ermittelt wird, der mit 8 bit Auflösung digitalisiert wird, also Werte zwischen 0 und 255 aufweisen kann.

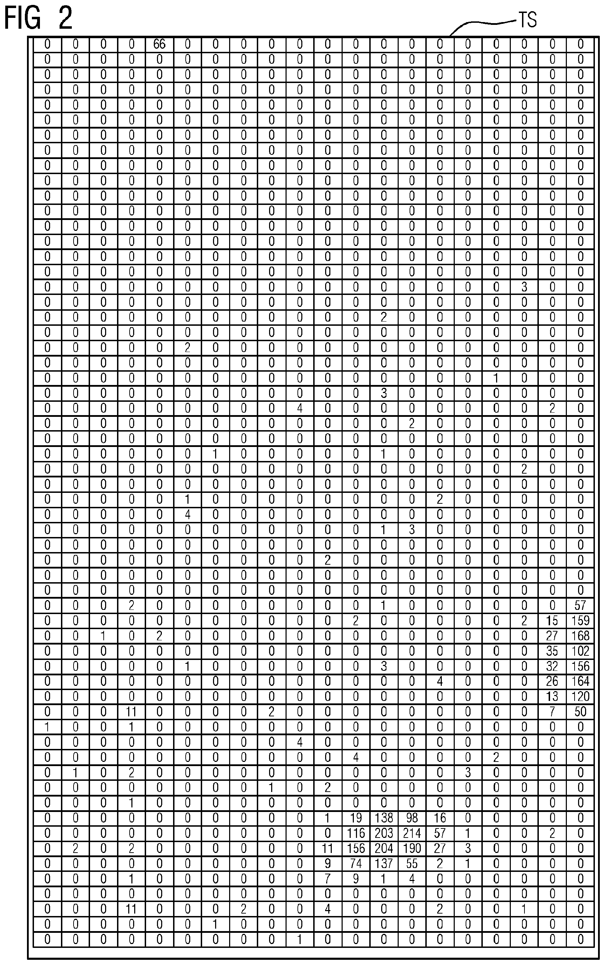

In der Figur 2 sind die Rohdaten in den exemplarischen Rasterzellen dargestellt, wobei davon ausgegangen wird, dass auch in nicht berührten Bereichen des Bildschirms TS Werte größer 0 erfasst werden können. Erst bei hohen Kapazitätswerten, also beispielsweise über 100, wird von einer tatsächlichen Berührung des Bildschirms ausgegangen. Bei der Darstellung in der Figur 2 handelt es sich um eine vereinfachte Darstellung; in der Praxis kann ein berührungsempfindlicher Bildschirm TS beispielsweise erst dann reagieren, wenn eine Mindest-Zeitdauer oder gewisse Konstanz der erfassten Kapazitätswerte auftritt.

In der Figur 2 ist zu sehen, dass eine Häufung höherer Kapazitätswerte sowohl im unteren Bereich des Bildschirms TS mit Schwerpunkt auf der rechten Seite und am rechten seitlichen Rand in der unteren Hälfte des Bildschirms TS auftritt.

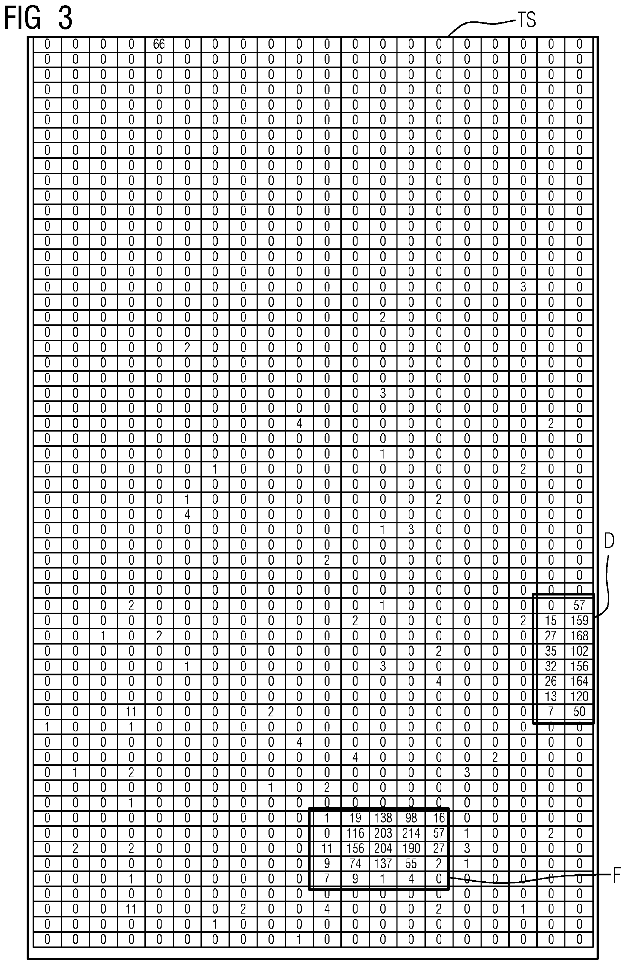

In der Figur 3 sind die Bereiche mit der Häufung höherer Kapazitätswerte gekennzeichnet, wobei davon ausgegangen wird, dass der Bereich D durch die Haltung des mobilen Gerätes mit dem Daumen der rechten Hand mit einer entsprechenden Auflagekraft beaufschlagt wurde, und der Bereich F durch einen Finger der linken Hand bei der Betätigung der Schaltfläche NO berührt wurde.

Während an die Anwendung, die mittels des Dialogs gesteuert wird, oder ein darunter liegendes Betriebssystem lediglich die Information darüber gemeldet wird, dass ein Ereignis stattgefunden hat, wobei eine mittlere Koordinate des Bereichs F gemeldet wird, werden als die Rohdaten zu diesem Bedienungs-Ereignis (Berührung; Interaktion) bzw. der vorliegenden Eingabe die Rohdaten gesichert, vorzugsweise die ermittelten Kapazitätswerte in den Bereichen D und F.

Dieser Vorgang wird sowohl bei einer ersten Nutzung des Bildschirmdialogs vorgenommen, wobei die Rohdaten und/oder daraus abgeleitete charakteristische Informationen für den dabei an dem mobilen Gerät angemeldeten Nutzer gespeichert werden, als auch bei einer späteren Nutzung, also beispielsweise in einem produktiven Betrieb, ebenfalls erfasst und mit den seinerzeit gespeicherten Rohdaten und/oder den davon abgeleiteten charakteristischen Informationen verglichen werden. Üblicherweise sind mehrere berechtigte Nutzer im System anmeldbar; die Daten werden dann immer für den angemeldeten Nutzer gespeichert.

Im Beispiel der Figuren 2 und 3 können als Rohdaten oder als charakteristische Informationen beispielsweise die Lage des Bereichs D, also des rechten Daumens des Nutzers, gespeichert werden. Dabei kann beispielsweise davon ausgegangen werden, dass jeder Nutzer das Gerät etwas anders in die Hand nimmt und deswegen die von dem rechten Daumen berührten Rasterflächen und der dabei aufgewendete Druck auf den Bildschirm TS jeweils etwas anders ist. Als weitere charakteristische Information über den jeweiligen Nutzer kann die ermittelte Auflagekraft, die proportional zu dem gemessenen Kapazitätswert in den jeweiligen Zellen ist, und die Ausdehnung des Bereiches F ermittelt werden. So ist bei einem "vertikalen" Auflegen eines Fingers auf die Schaltfläche NO davon auszugehen, dass der Bereich F ein Hochkant-Rechteck beschreibt. Im vorliegenden Fall ist das Rechteck, welches den Bereich F beschreibt, jedoch ein liegendes Rechteck, was bedeutet, dass der Finger, beispielsweise der linke Zeigefinger, eher in horizontaler Richtung auf die Schaltfläche aufgelegt wurde.

Während in diesem vereinfachten Beispiel anhand der Figuren 2 und 3 lediglich zwei charakteristische Informationen zur Verifizierung der Identität des Nutzers verwendet werden, können in der Praxis eine Vielzahl von Rohdaten und daraus abgeleiteter charakteristischer Informationen verwendet werden.

Wesentlich ist, dass anhand eines Grades der Übereinstimmung zwischen den nutzerspezifischen Rohdaten bzw. der daraus abgeleiteten charakteristischen Informationen zwischen einem ersten Bedienzyklus, beispielsweise gleich nach einer erfolgreichen Nutzer-Authentifizierung, und einer späteren Nutzung die Identität des Nutzers festgestellt oder verneint wird. Im letzteren Fall kann beispielsweise eine erneute Nutzer-Authentifizierung angefordert werden, das Gerät kann sich sperren, auch andere Reaktionen sind selbstverständlich programmierbar.

Mit Hilfe der vorgenannten Daten und Informationen allein ist in vielen Fällen eine Person nicht identifizierbar und damit auch "Account Hijacking" feststellbar. Oft sind die ermittelten Werte beispielsweise zu verrauscht, da sich ein elektrisches Potential eines Nutzers oder Bedieners sich in Abhängigkeit von vielen Faktoren ändern kann, beispielsweise durch die Umgebungstemperatur, die Benutzung von Handschuhen und dgl. Aus diesem Grund werden zusätzlich die Interaktionsdaten mit einer gesteuerten Anwendung mit den Rohdaten verknüpft und ausgewertet. Im vorliegenden Fall besitzt beispielsweise der in der Figur 1 dargestellte Eingabedialog eine Identifizierungsnummer, welche zusammen mit den Rohdaten, deren Gewinnung anhand der Figuren 2 und 3 beschrieben wurde, und den etwaigen abgeleiteten charakteristischen Informationen gespeichert spezifisch für einen Nutzer gespeichert wird. Dies geschieht sowohl bei einer ersten Nutzung als auch bei späteren Nutzungen. Die Verknüpfung der Rohdaten bzw. charakteristischen Informationen mit dem Bedienschritt (in diesem Fall: Identifizierungsnummer der Eingabemaske) führt zu einer höheren Erkennungswahrscheinlichkeit, weil die Charakteristika von Berührungen bzw. Berührungs-Interaktionen stark von der jeweils bedienten Anwendung und konkret von dem jeweiligen Bedienschritt und der damit verbundenen konkreten Ausgestaltung der graphischen Benutzeroberfläche abhängen. Gegenüber der im geschilderten Ausführungsbeispiel vereinfachten Darstellung können in der praktischen Anwendung weitere Parameter gespeichert werden, zum Beispiel eine Software-Version der Bedienmaske, eine Firmware-Version des Treibers und dergleichen.

Eine weitere Verbesserung der Genauigkeit der Erkennung bzw. Entscheidung über die Nutzer-Identität ist die Betrachtung von typischen komplexen Interaktionsmustern, beispielsweise der Reihenfolge, wie Schaltflächen bedient werden. Dabei wird nicht auf die bloße Reihenfolge abgestellt, sondern vielmehr auf Charakteristika wie Rhythmus, Fingerdruck (Kraft), Orientierung der Finger, Bedienpausen und dgl. Die Identifizierung solcher Interaktionsmuster ist dabei nahezu zwingend an die Information gebunden, welcher Bedienschritt auf einem Computer oder an einer Anwendung gerade durchgeführt wird. Diese Informationen werden zusammen mit den Rohdaten bzw. charakteristischen Informationen gespeichert.

Sofern das System, also die Verarbeitungseinrichtung, keine ausreichende Übereinstimmung der als Identitätsmerkmale verwendeten Rohdaten bzw. charakteristischen Informationen feststellt, fordert es eine Authentifizierung des Nutzers an. Anderenfalls kann der Anwender bzw. Nutzer das System ohne weitere Einschränkung benutzen. Vorteilhaft lernt das System über die Zeit die Interaktionsmuster eines Anwenders und die zugeordneten zu erwartenden Rohdaten bzw. charakteristischen Informationen kennen und kommt so fast ohne unnötige zwischenzeitliche Authentifizierungen aus.

Wie bereits beschrieben, ist es in vielen Fällen nötig, die Rohdaten bzw. charakteristischen Informationen und ggf. Interaktionsmuster mit einem spezifischen Arbeitsschritt oder Bedienhandlung oder dgl. zu verknüpfen. Deswegen ist es ohne größeren weiteren Aufwand möglich, bei den gesteuerten Anwendungen oder Computern kritische Bedienhandlungen oder Eingabemasken oder Eingabefelder oder allgemein Eingaben zu definieren, auf die sich der Prüfungsschritt der Identität des Nutzers reduzieren kann. Dadurch kann die Anzahl unnötiger oder zusätzlicher Authentifizierungsanfragen reduziert werden. Außerdem wird die erforderliche Rechenleistung der Verarbeitungseinheit reduziert, was in vielen Fällen von Vorteil ist, beispielsweise bei einem Betrieb der Verarbeitungseinrichtung auf demselben Computer, auf dem auch die gesteuerte Anwendung abläuft, oder bei einem Betrieb der Verarbeitungseinrichtung in einer "Cloud" ("Cloud Based Service"), wodurch die Kommunikationserfordernisse sich auf wirklich wichtige Bedienschritte reduzieren lassen. So können nur für relevante Änderungen, Eingaben oder Bedienschritte Prüfungen in Bezug auf ein mögliches Account-Hijacking durchgeführt werden.

Bei einer Anfrage einer erneuten Authentifizierung des Nutzers muss nicht zwangsläufig dieselbe Methode, beispielsweise Eingabe eines Nutzernamens und eines Passwortes, verwendet werden, wie bei einer ersten Nutzung oder bei der aktuellen Anmeldung an einem System oder Computer. Vielmehr können andere Authentifizierungswege gewählt werden, beispielsweise die Eingabe eines spezifischen Eingabemusters auf dem berührungsempfindlichen Bildschirm TS, wobei nicht allein die Nutzereingabe in Form von Zahlen, Buchstaben oder Mustern entscheidend ist, sondern auch zusätzlich die dabei entstehenden Rohdaten des Bildschirms TS ausgewertet werden. Zusätzlich oder alternativ können auch andere, vorzugsweise komfortable Wege und Mittel benutzt werden, beispielsweise durch das Vorlesen eines Codewortes, das auf dem Bildschirm angezeigt wird, wonach dann eine Stimmmustererkennung stattfindet oder dgl.

Während also im Stand der Technik ein Account-Hijacking nur durch zusätzliche Nutzer-Authentifizierungen erkannt werden kann, werden erfindungsgemäß Rohdaten des berührungsempfindlichen Bildschirms TS und Interaktionsdaten auf Applikationsebene zur Identifikation kombiniert. Dadurch kann nutzungsbegleitend kontinuierlich die Sicherheit des Computers überwacht werden.

## Patentansprüche

1. Verfahren zum Detektieren einer missbräuchlichen Nutzung eines Computers mit einem berührungsempfindlichen Bildschirm (TS), insbesondere eines industriellen Bedien-Panels zur Steuerung einer industriellen Anwendung,
wobei durch einen an dem Computer angemeldeten Nutzer eine Anzahl Berührungen auf dem Bildschirm (TS) vorgenommen wird, und
wobei anhand der Koordinaten der registrierten Berührungen eine Eingabe an dem Computer vorgenommen wird, **dadurch gekennzeichnet,**
**dass** spezifisch für einen oder mehrere Nutzer Rohdaten bei einer Berührung des berührungsempfindlichen Bildschirms (TS) bei einer ersten Nutzung erfasst und gespeichert werden,
**dass** bei einer aktuellen Nutzung des Bildschirms (TS) aktuelle Rohdaten bei einer Berührung des berührungsempfindlichen Bildschirms (TS) erfasst und mit den in Bezug auf denselben Nutzer gespeicherten Rohdaten verglichen werden,
**dass** anhand des Vergleichs entschieden wird, ob die Eingabe durch den aktuell an dem Computer angemeldeten Nutzer erfolgt oder durch einen anderen Nutzer, und
**dass** im letzteren Fall eine Sicherheitsreaktion erfolgt, insbesondere eine Sperrung des Computers erfolgt oder eine Authentifizierung des Nutzers angefordert wird.

2. Verfahren nach Patentanspruch 1,
**dadurch gekennzeichnet,**
**dass** die Rohdaten bei der ersten Nutzung spezifisch für einen oder mehrere Bedienschritte des Computers gespeichert werden, wobei die bei der aktuellen Nutzung des Computers registrierten Rohdaten mit den spezifisch für denselben Bedienschritt des Computers verglichen werden.

3. Verfahren nach Patentanspruch 1 oder 2,
**dadurch gekennzeichnet,**
**dass** bei einer großen Übereinstimmung der Rohdaten bei der ersten und der aktuellen Nutzung auf eine tatsächliche Identität der Nutzer bei den Nutzungen entschieden wird.

4. Verfahren nach einem der vorhergehenden Patentansprüche,
**dadurch gekennzeichnet,**
**dass** die Eingabe aus einer Sequenz mit einer Mehrzahl von Berührungs-Interaktionen besteht, wobei spezifisch für einen oder mehrere Nutzer ein Interaktionsmuster erfasst und gespeichert wird, wobei bei einer aktuellen Nutzung des Computers ein aktuell registriertes Interaktionsmuster mit dem oder den gespeicherten Interaktionsmustern verglichen wird.

5. Verfahren nach Patentanspruch 4,
**dadurch gekennzeichnet,**
**dass** das Interaktionsmuster spezifisch für einen oder mehrere Bedienschritte des Computers oder einer Anwendung oder einer damit bedienten Einrichtung gespeichert wird, wobei das bei der aktuellen Nutzung des Computers registrierte Interaktionsmuster mit dem spezifisch für denselben Bedienschritt des Computers oder der Anwendung oder der damit bedienten Einrichtung verglichen wird.

6. Verfahren nach einem der Patentansprüche 4 oder 5,
**dadurch gekennzeichnet,**
**dass** mit jeder Berührungs-Interaktion der Sequenz eine Zeitinformation zur zeitlichen Bestimmung eines Bezugs zwischen den Berührungs-Interaktionen erfasst wird, insbesondere zur Erfassung eines charakteristischen Rhythmus bei der Eingabe der Berührungs-Interaktionen, wobei die zeitlichen Bezüge zwischen den gespeicherten Berührungs-Interaktionen einer früheren Sequenz mit denen einer aktuellen Sequenz verglichen werden.

7. Verfahren nach einem der Patentansprüche 4 bis 6,
**dadurch gekennzeichnet,**
**dass** zu einer Anzahl der Berührungs-Interaktionen jeweils Rohdaten bei der ersten Nutzung gespeichert und dem Interaktionsmuster zugeordnet und gespeichert werden, und wobei bei der späteren Nutzung bei korrelierenden Berührungs-Interaktionen aktuelle Rohdaten ermittelt und mit den in Bezug auf denselben Nutzer gespeicherten Rohdaten der Berührungs-Interaktionen verglichen werden.

8. Verfahren nach einem der vorhergehenden Patentansprüche,
**dadurch gekennzeichnet,**
**dass** als die Rohdaten bei kapazitiven berührungsempfindlichen Bildschirmen (TS) die bei einer Berührung registrierten Kapazitätswerte zumindest der im Bereich der Berührung liegenden Zellen des Bildschirms verwendet werden, und/oder
**dass** als die Rohdaten bei resistiven berührungsempfindlichen Bildschirmen (TS) die bei einer Berührung registrierten Widerstandswerte zumindest der im Bereich der Berührung liegenden Zellen des Bildschirms (TS) verwendet werden.

9. Verfahren nach einem der vorhergehenden Patentansprüche,
**dadurch gekennzeichnet,**
**dass** aus den Rohdaten jeweils ein Charakteristikum für den bei der Berührung verwendeten Finger des Nutzers erfasst wird, und
**dass** bei einer großen Übereinstimmung des Charakteristikums bei der ersten und der aktuellen Nutzung auf eine tatsächliche Übereinstimmung der Nutzer bei der ersten und der aktuellen Nutzung entschieden wird.

10. Verfahren nach einem der vorhergehenden Patentansprüche,
**dadurch gekennzeichnet,**
**dass** aus den Rohdaten jeweils ein planarer Winkel oder ein Raumwinkel eines bei der Berührung verwendeten Fingers des Nutzers zu der Oberfläche des Bildschirms (TS) bestimmt wird.

11. Verfahren nach einem der vorhergehenden Patentansprüche,
**dadurch gekennzeichnet,**
**dass** aus den Rohdaten jeweils eine Flächenangabe über die Größe der Berührungsfläche des Fingers auf der Oberfläche des Bildschirms (TS) erfasst wird.

12. Verfahren nach einem der vorhergehenden Patentansprüche,
**dadurch gekennzeichnet,**
**dass** aus den Rohdaten charakteristische Parameter für eine eingesetzte Berühungsgeste, insbesondere über die Ausdehnung, Richtung und/oder Geschwindigkeit der Berührungsgeste, ermittelt werden.

13. Verfahren nach einem der vorhergehenden Patentansprüche,
**dadurch gekennzeichnet,**
**dass** als die Rohdaten nur für eine Anzahl durch die Berührung betroffener Rasterpunkte oder Rasterflächen des Bildschirms (TS) und deren Koordinaten erfasst werden.

14. Verfahren nach Patentanspruch 12,
**dadurch gekennzeichnet,**
**dass** als die Rohdaten für jeden Rasterpunkt oder jede Rasterfläche zumindest im Bereich der Berührung eine Kraft oder das Äquivalent einer Kraft der Berührung auf dem Bildschirm (TS) erfasst wird.

15. Anordnung zum Detektieren einer missbräuchlichen Nutzung eines Computers, insbesondere eines industriellen Bedien-Panels zur Steuerung einer industriellen Anwendung,
mit dem Computer und einem berührungsempfindlichen Bildschirm (TS),
wobei der berührungsempfindliche Bildschirm (TS) zur Registrierung einer Anzahl Berührungen eines Nutzers und der zur Übertragung der dabei erfassten Koordinaten der registrierten Berührung an den Computer eingerichtet ist,
**dadurch gekennzeichnet,**
**dass** der berührungsempfindliche Bildschirm (TS) zur Erfassung von Rohdaten bei der Benutzung des berührungsempfindlichen Bildschirms (TS) eingerichtet ist,
**dass** eine Verarbeitungseinrichtung zur benutzerspezifischen Speicherung der Rohdaten oder von aus den Rohdaten gewonnenen charakteristischen Informationen bei einer ersten Nutzung vorgesehen ist,
**dass** die Verarbeitungseinrichtung zum Vergleich der Rohdaten oder der charakteristischen Informationen einer aktuellen Nutzung des berührungsempfindlichen Bildschirms (TS) mit den bei der ersten Nutzung erfassten Rohdaten oder charakteristischen Informationen eingerichtet ist,
**dass** die Verarbeitungseinheit zur Verifizierung der Identität des angemeldeten Nutzers bei einer aktuellen Nutzung anhand des Vergleichs eingerichtet ist, und
**dass** die Verarbeitungseinheit zur Veranlassung einer Sicherheitsreaktion im Falle einer fehlgeschlagenen Verifizierung eingerichtet ist, insbesondere zur Sperrung des Computers oder zur Anforderung einer Authentifizierung des Nutzers.
